# FASCICULE DE BREVET EUROPEEN

(11) **EP 0 498 214 B1**
(45) Date de publication et mention de la délivrance du brevet: **19.07.1995**
(21) Numéro de dépôt: 92101009.6
(22) Date de dépôt: 22.01.1992
(51) Int. Cl.: B60C 15/02, B60C 15/024

(54) **Ensemble d'un pneumatique et d'une jante permettant d'éviter le délogement des bourrelets du pneumatique**
Einheit Felge-Reifen, die eine Entwulstung vermeidet
Rim-tyre combination which retains the tyre heads

(30) Priorité: 08.02.1991 FR 9101574
(43) Date de publication de la demande: 12.08.1992
(73) Titulaire: COMPAGNIE GENERALE DES ETABLISSEMENTS MICHELIN - MICHELIN & CIE, 63040 Clermont-Ferrand Cédex (FR)
(72) Inventeur: Blazy, Jean-Claude, F-63140 Chatel-Guyon (FR); Pompier, Jean-Pierre, F-63530 Volvic (FR)
(74) Mandataire: Devaux, Edmond-Yves

(56) Documents cités:
- EP-A- 0 167 283
- EP-A- 0 273 056
- EP-A- 0 334 955
- FR-A- 2 548 970
- US-A- 4 940 069

## Description

L'invention concerne un ensemble formé d'une jante munie d'une saillie circonférentielle de retenue de bourrelet, et d'un pneumatique à armature de carcasse radiale, dépourvu de chambre à air indépendante. Elle concerne aussi une jante spéciale munie au moins d'une saillie circonférentielle.

Il est connu que, sous l'effet combiné des forces multiples existant entre la surface de contact du pneumatique avec le sol, et des couples non moins multiples affectant la roue, des sollicitations importantes sont imposées aux bourrelets du pneumatique, en particulier dans le cas d'une perte de pression importante et d'un roulage sur une trajectoire de faible rayon. Ces sollicitations provoquent le déplacement axial, vers la partie creuse de la jante utilisée, du bourrelet le plus éloigné du centre de la trajectoire.

On connaît divers moyens visant à remédier audit problème, moyens consistant généralement à choisir une forme appropriée du profil de jante. Un des moyens consiste à retenir le bourrelet par une saillie circonférentielle disposée entre la gorge circonférentielle de montage et le siège tronconique de la jante, saillie communément désignée sous le terme de "Hump". Il existe actuellement différentes formes de saillies circonférentielles, formes normalisées (normes de l'ETRTO par exemple). On peut distinguer :
- la saillie simple dite "Hump" présentant en section méridienne un profil sous forme d'arc circulaire,
- la saillie plate dite "Flat Hump" présentant en section méridienne un profil comportant effectivement une partie plate. Que ce soit "Hump" ou "Flat Hump", le diamètre de la saillie circonférentielle a une valeur qui permet au bourrelet du pneumatique de la franchir au cours du montage sur la jante. Le compromis obtenu sur les propriétés de délogement du bourrelet et du montage-démontage n'est pas satisfaisant.

Ainsi est apparue une jante avec des saillies asymétriques ("Asymmetric-Hump") : une saillie a alors une hauteur, au dessus du siège de jante, variable circonférentiellement, pour passer d'une valeur maximale à une valeur minimale selon un diamètre et d'une valeur minimale à une valeur maximale selon un deuxième diamètre, décalé axialement par rapport au précédent.

Dans le cas de bourrelets connus de pneumatiques, il ne semble pas que cette solution de jante ait résolu le problème, malgré une hauteur de saillie plus grande que dans le cas d'une saillie circulaire ou d'une saillie plate.

Dans le cadre de l'emploi de pneumatiques sur des jantes avec saillie circonférentielle, il apparaît donc nécessaire de modifier la structure des bourrelets de ces pneumatiques. Le brevet FR 2 548 970 enseigne une telle modification, il concerne le bourrelet d'un pneumatique destiné à être monté et être utilisé sur une jante avec saillie plate. Ce bourrelet est caractérisé par la combinaison du profil méridien de sa base, adapté au profil du siège de la jante de montage, et de l'emplacement axial de sa tringle, cette combinaison permettant un serrage du bourrelet sur la jante très important sans cela pénaliser le montage du pneumatique sur sa jante.

Cette solution n'est pas idéale, puisque les bourrelets se délogent des sièges de jante, sous des conditions sévères de roulage, à des pressions non nulles, ces valeurs de pression étant par ailleurs très variables en fonction des tolérances admises sur les jantes.

L'invention, afin de résoudre les problèmes cités tout en obtenant un bon compromis entre le montage ou démontage du pneumatique sur sa jante, la tenue à la rotation sur jante du bourrelet et le délogement du bourrelet, propose une solution perfectionnée mettant en jeu la combinaison du profil méridien de la jante sur laquelle sera monté le pneumatique avec la forme et la constitution du (des) bourrelet(s) dudit pneumatique.

Ainsi, l'ensemble revendiqué, selon le préambule de la revendication 1, est formé d'un pneumatique pour véhicule léger, dépourvu de chambre à air indépendante, doté d'une armature de carcasse radiale et d'une armature de sommet composée d'au moins deux nappes de fils ou câbles inclinés d'un angle faible par rapport à la direction circonférentielle, l'armature de carcasse étant ancrée dans chaque bourrelet par enroulement autour d'une tringle sensiblement inextensible, et d'une jante munie de deux rebords, d'une gorge circonférentielle et au moins, du côté extérieur du véhicule, d'un siège de jante faisant avec l'axe de rotation de l'ensemble un angle (δ) égal à 5 ± 1° et pourvu d'une saillie circonférentielle, symétrique de révolution autour dudit axe de rotation, le point (A) de cette saillie le plus éloigné radialement de l'axe de rotation se trouvant à une distance axiale (L) du rebord de jante. L'ensemble ci-dessus est caractérisé, conformément à l'invention, en ce que, vue en section méridienne, la jante a un siège pourvu d'une saillie circonférentielle dont le point le plus éloigné de l'axe de rotation est situé à une distance radiale (H), mesurée entre le point (C) du siège présentant le diamètre minimal et ledit point (A), comprise entre 3 et 4 mm, ce point (A) étant réuni axialement à l'extérieur à la génératrice tronconique du siège, faisant un angle (δ) de 5° ± 1° avec l'axe de rotation de l'ensemble, par un arc de cercle (15) centré sur la perpendiculaire à l'axe de rotation, passant par (A), et de rayon (R₂) compris entre 6 et 8 mm, et un deuxième arc de cercle de rayon (R₃) tangent au premier arc de rayon (R₂) et à la génératrice tronconique du siège, (R₃) étant égal à 2 ± 1 mm, et axialement à l'intérieur à la gorge de montage (4) par une génératrice tronconique (16) faisant avec l'axe de rotation un angle (ϑ) compris entre 10° et 30° et de largeur axiale (λ) au moins égale à 5 mm; en ce que le bourrelet destiné a être monté sur le siège de jante munie de la saillie circonférentielle, a une base dont le profil méridien est adapté au profil méridien dudit siège, profil méridien qui présente axialement à l'intérieur à partir d'un point distant de la paroi verticale du bourrelet d'une quantité comprise entre 0,9 L - 1 mm et 0,9 L, une génératrice en forme d'arc de cercle de rayon (ρ) compris entre 4 et 8 mm, la corde sous-tendant cette génératrice faisant avec l'axe de rotation un angle compris entre 20° et 40°, ladite génératrice étant prolongée par une dernière génératrice quasi-cylindrique, les extrémités axialement à l'intérieur desdites génératrices étant respectivement distantes axialement de la paroi verticale du bourrelet des quantités (L) et (L₁) supérieure à L d'au plus 5 mm et en ce que le vulcanisat entourant le complexe tringle, armature de carcasse et retournement de celle-ci, axialement de part et d'autre de ce complexe et au moins dans la partie radialement à l'intérieur d'un axe parallèle à l'axe de rotation passant par l'extrémité du retournement de l'armature de carcasse, a un module sécant d'élasticité en extension sous un allongement de 10 % au moins égal à 4 MPa.

Il faut entendre par génératrice quasi-cylindrique une génératrice faisant avec l'axe de rotation de l'ensemble un angle compris entre - 5° et + 5°, c'est-à-dire une génératrice faisant avec l'axe de rotation un angle de 5° mais pouvant être située de part et d'autre dudit axe de rotation.

De manière préférentielle, la base du bourrelet destiné à prendre appui sur le siège de jante avec saillie présente aussi un arc de cercle tangent à la paroi verticale du bourrelet et à une génératrice tronconique faisant avec l'axe de rotation de l'ensemble un angle (α) compris entre 0° et 15°, ladite génératrice étant prolongée axialement à l'intérieur par une deuxième génératrice faisant avec l'axe de rotation un angle (β) compris entre 20° et 35°, elle-même prolongée d'une génératrice quasi-cylindrique qui précéde la génératrice circulaire de rayon (ρ) citée ci-dessus, les extrémités axialement à l'intérieur desdites génératrices étant respectivement distantes axialement de la paroi verticale du bourrelet (B) des quantités (L₁₀) égale à 0,4 L ± 1 mm, (L₁₁) égale à 0,7 L ± 1 mm et (L₁₂) comprise entre 0,9 L - 1 mm et 0,9 L.

La zone de raccordement entre la paroi verticale du bourrelet et la première zone tronconique de la base du bourrelet est généralement circulaire mais peut, de façon préférentielle, se présenter sous forme tronconique, la génératrice de cette surface faisant alors avec l'axe de rotation un angle (φ)positif compris entre 45° et 60°. Cette forme tronconique permet au montage du pneumatique sur la jante une meilleure position du bourrelet, apte à faciliter le montage.

De manière avantageuse, afin de conserver les mêmes propriétés d'étanchéité après plusieurs montages et démontages du pneumatique, la partie inférieure du bourrelet recouvrant la deuxième zone tronconique d'angle (β) et au plus la partie quasi-cylindrique qui la prolonge, est constituée d'un vulcanisat dit à bas module d'élasticité d'extension. Préférentiellement le module sécant d'élasticité en extension du vulcanisat employé est au plus égal à 0,7 MPa sous 10 % d'allongement.

Il faut entendre par module sécant d'extension la valeur du rapport de la contrainte subie par l'éprouvette à 10 % d'allongement, sur ledit allongement relatif de 10 %.

La jante de montage, telle que décrite précédemment et bien que particulièrement étudiée pour des bourrelets du pneumatique adaptés, peut être utilisée, conformément à l'invention pour le montage de pneumatiques possédant des bourrelets de forme et constitution normales et connues.

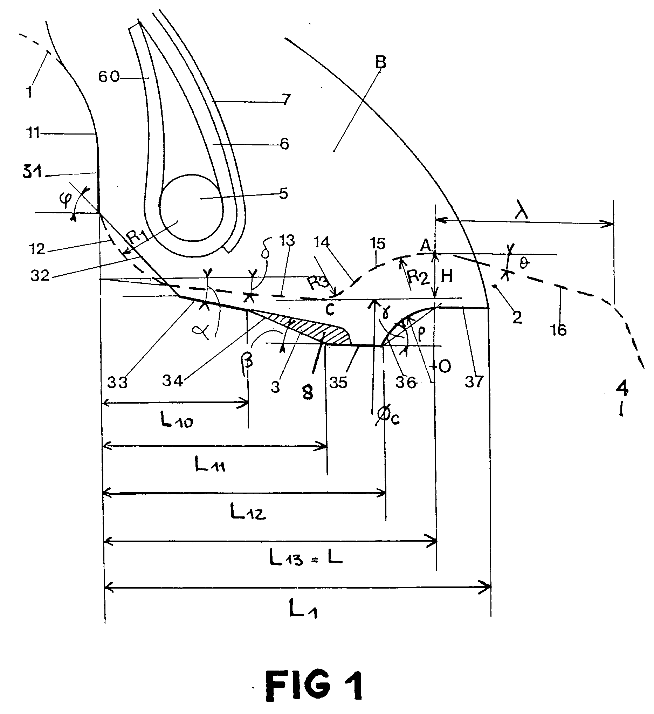

Des exemples de réalisation, selon l'invention et non limitatifs sont décrits ci-après en référence au dessin ci-joint dont l'unique figure 1 est une vue en section radiale par un plan passant par l'axe de rotation d'un bourrelet du pneumatique par rapport au contour de la jante de montage du côté extérieur au véhicule, avec une saillie perfectionnée.

Sur la figure, le contour de jante est tracé en pointillés, alors que le contour du bourrelet est représenté en traits pleins, lorsque le pneumatique est non monté sur la jante et non gonflé à sa pression de service.

Sur la figure 1 est montré le contour d'une jante (1) de diamètre nominal égal à 380,2 mm. La jante de montage (1 ) comprend un rebord de jante (11), perpendiculaire à l'axe de rotation et réuni à une génératrice tronconique (13) par l'intermédiaire d'une zone (12) en arc de cercle de rayon (R₁) maximum égale à 6,4 mm. Cette génératrice (13) fait avec l'axe de rotation un angle (δ) égal à 5 ± 1°. La jante (1) comprend aussi une saillie circonférentielle (2) jouissant d'une symétrie de révolution totale : les points (A) les plus éloignés de l'axe de rotation ont pour lieu géométrique un cercle centré sur l'axe de rotation de la jante. Les points (A) sont situés axialement à une distance (L) du rebord de jante (11) égale à 22 mm. La hauteur (H) de la saillie circonférentielle (2), distance radiale mesurée perpendiculairement à l'axe de rotation entre deux droites parallèles audit axe et passant respectivement par le point sommet (A) de la saillie (2) et par le point (C) de la génératrice (13), pour lequel le diamètre (⌀_{c}) est minimal, est égale à 4 mm. Le point sommet (A) est réuni axialement à l'extérieur au point (C) par l'intermédiaire de la génératrice circulaire (15) de rayon (R₂) égale à 8 mm, le centre (O) de l'arc de cercle (15) étant sur la perpendiculaire à l'axe de rotation passant par (A). La génératrice (15) est prolongée par un deuxième arc de cercle (14) de rayon (R₃) égal à 2 mm ± 1 mm.

Le mêmo point (A) est réuni à la gorge de montage (4) (non montrée) principalement par une zone tronconique de génératrice (16), dont l'inclinaison (ϑ) par rapport à l'axe de rotation est égale à 14°, et dont la largeur axiale (λ) est égale à 11 mm.

Comparativement à ce contour de jante, et selon l'invention, le bourrelet (B) du pneumatique, comportant une tringle (5) autour de laquelle vient s'ancrer l'armature de carcasse (6) possède une base (3) de largeur axiale (L₁) supérieure à la distance (L) d'au plus 5 mm. Dans le cas étudié et montré sur la figure 1, le contour de la base (3) du bourrelet (B) est constitué d'une paroi verticale (31), d'un arc de cercle ou d'une génératrice tronconique (32), de deux génératrices tronconiques (33) et (34), d'une génératrice quasi-cylindrique (35) prolongée axialement vers l'intérieur d'une génératrice (36) en arc de cercle, le contour de la base (3) étant terminé par une génératrice quasi-cylindrique (37).

La paroi verticale (31) est à la même distance du plan équatorial du pneumatique que la paroi interne (11) du rebord de jante. La génératrice (32) fait avec l'axe de rotation un angle (φ) égale à 48°. La génératrice (33), reliée à la paroi (31) par la génératrice (32) fait avec l'axe de rotation un angle (α) égal à 11° et l'extrémité de cette génératrice (33) se trouve à une distance axiale (L₁₀), égale à 9,5 mm, du rebord de jante. La génératrice (34) fait avec l'axe de rotation un angle (β) de 24°, et l'extrémité de cette génératrice (34) se trouve à une distance axiale (L₁₁) du rebord de jante (11), égale à 15 mm. Prolongeant axialement vers l'intérieur la génératrice (34), la génératrice cylindrique (35) a son extrémité axialement intérieure située à la distance (L₁₂) du rebord (11), distance égale à 19 mm, et se trouve prolongée par une génératrice (36) en arc de cercle de rayon (ρ) égale à 8 mm, et dont l'extrémité est distante du rebord (11) de jante d'une quantité (L₁₃), égale à (L) et à 22 mm. La corde qui sous-tend l'arc de cercle (36) fait avec l'axe de rotation de l'ensemble jante-pneumatique un angle (γ) égal à 30°. La base (3) se termine par une génératrice cylindrique (37) de faible largeur égale à 3 mm.

La portion hachurée (8) de la figure 2 représente l'emplacement du vulcanisat à faible module d'élasticité en extension. Il va sans dire que le contour de cette portion tel que représenté, est idéal, car si le profil à cru de la bande de caoutchouc nécessaire est très bien défini et contrôlé, le moulage et la vulcanisation font en sorte que le contour théorique n'est que très rarement parfaitement respecté. Cette portion (8) est de très faible volume par rapport au volume occupé par le mélange à fort module d'élasticité en tension, mélange qui occupe, vu sur la figure 1, toute la surface à l'extérieur de l'armature de carcasse (6) et de son retournement (60), les extrémités radialement à l'extérieur de ce vulcanisat étant de part et d'autre de l'armature de carcasse (6) situées au dessus de l'extrémité du retournement (60). Dans le cas étudié, le mélange à faible module d'élasticité est un mélange ayant la même composition que le mélange constituant le revêtement intérieur étanche (7) du pneumatique.

La hauteur (H) de la saillie (2), comprise entre 3 et 4 mm permet d'atteindre de bonnes performances anti-délogement des bourrelets quel que soit le type de bourrelet monté sur la jante (1) comportant cette saillie, performances du même ordre que celles obtenues avec l'ensemble constitué par un pneumatique à bourrelet élargi et adapté et une jante à saillie circonférentille circulaire ou plate normalisée. Par contre, l'ensemble pneumatique à bourrelet élargi et jante à saillie circonférentielle symétrique de révolution et de hauteur (H), procure d'excellents résultats puisque, sous une pression nulle, le bourrelet n'est pas délogé de son emplacement initial.

Le test pratiqué consiste à lancer un véhicule à une vitesse de 50 km/h sur une piste ayant un tracé en forme de clothoïde dont le rayon de courbure de la trajectoire moyenne varie progressivement de l'infini à 20 m. On mesure la pression de délogement. Un pneumatique, tel que décrit dans le brevet FR 2 548 970, monté sur une jante dite à "Flat Hump" présente des délogements de bourrelet à des pressions de 0,6 - 0,5 bars. Un ensemble comprenant un pneumatique avec un bourrelet tel que décrit ci-dessus et une jante normalisée avec "Hump", présente les mêmes délogements pour des pressions de 0,4 - 0,3 bars. Il en est de même des ensembles formés d'une jante telle que décrite dans la revendication 5 et de pneumatiques comportant des bourrelets connus, dont la base a une largeur axiale, dans le cas de la dimension étudiée, égale à 12 mm. Un ensemble, tel que décrit dans la revendication 1 ne présente pas de phénomène de délogement de bourrelet à 0 bar, et ces résultats sont obtenus sans que des difficultés de montage ou démontage apparaissent. En effet, la présence de la génératrice (16) inclinée par rapport à l'axe de rotation permet une prise de pression provisoire du bourrelet (B) sur la rampe (16) nécessaire pour effectuer le montage et facilite le franchissement de la saillie (2) par le bourrelet de façon alternée, c'est-à-dire d'abord à un endroit donné de la jante puis progressivement sur le reste de la circonférence. Par ailleurs, la présence axialement à l'extérieur du point sommet (A) de la saillie (2) d'une génératrice circulaire (15) à grand rayon permet un démontage facile, sans, comme démontré, pénaliser la performance anti-délogement du bourrelet.

## Revendications

1. Ensemble formé d'un pneumatique pour véhicule léger,dépourvu de chambre à air indépendante, doté d'une armature de carcasse radiale (6) et d'une armature de sommet l'armature de carcasse (6) étant ancrée dans chaque bourrelet (B) par enroulement autour d'une tringle (5) sensiblement inextensible, et d'une jante (1) munie de deux rebords (11), d'une gorge circonférentielle (4) et au moins du côté extérieur du véhicule d'un siège de jante faisant avec l'axe de rotation de l'ensemble un angle (δ) égal à 5° ± 1° et pourvu d'une saillie circonférentielle (2) symétrique de révolution autour dudit axe de rotation, le point (A) de cette saillie le plus éloigné radialement de l'axe de rotation se trouvant à une distance axiale (L) du rebord de jante (11) caractérisé en ce que, vue en section méridienne, la jante a un siège pourvu d'une saillie circonférentielle (2) dont le point (A) le plus éloigné de l'axe de rotation est situé à une distance radiale (H), mesurée entre le point (C) du siège présentant le diamètre minimal et ledit point (A), comprise entre 3 et 4 mm, ce point (A) étant réuni axialement à l'extérieur à la génératrice tronconique (13) du siège, faisant un angle (δ) de 5 ± 1° avec l'axe de rotation de l'ensemble, par un arc de cercle (15) centré sur la perpendiculaire à l'axe de rotation, passant par (A), et de rayon (R₂) compris entre 6 et 8 mm, et un deuxième arc de cercle (14) de rayon (R₃) tangent au premier arc (15) de rayon (R₂) et à la génératrice tronconique (13) du siège, (R₃) étant égal à 2 ± 1 mm, et axialement à l'intérieur à la gorge de montage (4) par une génératrice tronconique (16) faisant avec l'axe de rotation un angle (ϑ) compris entre 10° et 30° et de largeur axiale (λ) au moins égale à 5 mm, en ce que le bourrelet (B) destiné à être monté sur le siège de jante munie de la saillie circonférentielle (2) a une base (3) dont le profil méridien est adapté au profil méridien dudit siège, profil méridien qui présente axialement à l'intérieur à partir d'un point distant de la paroi verticale (31) du bourrelet (B) d'une quantité (L₁₂) comprise entre 0,9 L - 1 mm et 0,9 L, une génératrice en forme d'arc de cercle de rayon (ρ) compris entre 4 et 8 mm, la corde sous-tendant cette génératrice (36) faisant avec l'axe de rotation un angle (γ)compris entre 20° et 40°, ladite génératrice (36) étant prolongée par une dernière génératrice (37) quasi-cylindrique, les extrémités axialement à l'intérieur desdites génératrices étant respectivement distantes axialement de la paroi verticale (31) du bourrelet (B) des quantités (L) et (L₁) supérieure à L d'au plus 5 mm et en ce que le vulcanisat entourant le complexe tringle (5)-armature de carcasse (6) et retournement de celle-ci (60), axialement de part et d'autre de ce complexe et au moins dans la partie radialement à l'intérieur d'un axe parallèle à l'axe de rotation passant par l'extrémité du retournement (60) de l'armature de carcasse (6), a un module sécant d'élasticité en extension sous un allongement de 10 % au moins égal à 4 MPa.

2. Ensemble selon la revendication (1), caractérisé en ce que la base (3) du bourrelet (B) destiné à prendre appui sur le siège de jante avec saillie circonférentielle (2) présente aussi un arc de cercle (32) tangent à la paroi verticale du bourrelet (31) et à une génératrice tronconique (33) faisant avec l'axe de rotation de l'ensemble un angle (α) compris entre 0° et 15°, ladite génératrice (33) étant prolongée axialement à l'intérieur par une deuxième génératrice (34) faisant avec l'axe de rotation un angle (β) compris entre 20° et 35°, elle-même prolongée d'une génératrice quasi-cylindrique (35) qui précède la génératrice (36) circulaire de rayon (ρ) les extrémités axialement à l'intérieur desdites génératrices étant respectivement distantes axialement de la paroi verticale (31) du bourrelet B des quantités (L₁₀) égale à 0,4 L ± 1 mm, (L₁₁) égale à 0,7 L ± 1 mm, et (L₁₂) comprise entre 0,9 L - 1 mm et 0,9 L.

3. Ensemble selon la revendication (2), caractérisé en ce que l'arc de cercle (32) tangent à la paroi verticale (31) du bourrelet (B) est remplacé par la génératrice (32) d'une zone tronconique, cette génératrice (32) faisant avec l'axe de rotation de l'ensemble un angle (φ) compris entre 45° et 60°.

4. Ensemble selon l'une des revendications 1 à 3, caractérisé en ce que la partie inférieure du bourrelet, sensiblement délimitée radialement à l'intérieur par la deuxième zone tronconique (34) d'angle (β) et au plus la totalité de la zone quasi-cylindrique (35), radialement à l'extérieur par le prolongement vers l'intérieur de la première zone tronconique (33) d'angle (α) et axialement à l'intérieur par une paroi quasi-verticale, est constituée d'un vulcanisat dont le module sécant d'élasticité en extension sous un allongement de 10 % est au plus égal à 0,7 MPa.

5. Jante pour véhicule léger comportant au moins un siège pourvu d'une saillie circonférentielle (2) dont le point (A) le plus éloigné de l'axe de rotation est situé à une distance radiale (H), mesurée entre le point (C) du siège présentant le diamètre minimal et ledit point (A), comprise entre 3 et 4 mm, ce point (A) étant réuni axialement à l'extérieur à la génératrice tronconique (13) du siège, faisant un angle (δ) de 5 ± 1° avec l'axe de rotation de l'ensemble, par un arc de cercle (15) centré sur la perpendiculaire à l'axe de rotation, passant par (A), et de rayon (R₂) compris entre 6 et 8 mm, et un deuxième arc de cercle (14) de rayon (R₃) tangent au premier arc (15) de rayon (R₂) et à la génératrice tronconique (13) du siège, (R₃) étant égal à 2 ± 1 mm, et axialement à l'intérieur à la gorge de montage (4) par une génératrice tronconique (16) faisant avec l'axe de rotation un angle (ϑ) compris entre 10° et 30° et de largeur axiale (λ) au moins égale à 5 mm.

## Claims

1. An assembly formed by a tyre for a light vehicle, without an independent inner tube, provided with a radial carcass reinforcement (6) and a crown reinforcement, the carcass reinforcement (6) being anchored in each bead (B) by winding around a substantially inextensible bead wire (5), and by a rim (1) provided with two flanges (11), a circumferential groove (4) and at least on the outer side of the vehicle a rim seat forming an angle (δ) equal to 5° ± 1° with the axis of rotation of the assembly and provided with a circumferential projection (2), symmetrical in revolution about said axis of rotation, the point (A) of this projection which is radially furthest from the axis of rotation being located at an axial distance (L) from the rim flange (11), characterised in that, viewed in meridian section, the rim has a seat provided with a circumferential projection (2), the point (A) of which which is furthest from the axis of rotation is located at a radial distance (H), measured between the point (C) of the seat having the minimum diameter and said point (A), of between 3 and 4 mm, this point (A) being joined axially on the outside to the frustoconical generatrix (13) of the seat, forming an angle (δ) of 5 ± 1° with the axis of rotation of the assembly, by a circular arc (15) centred on the line perpendicular to the axis of rotation, passing through (A), and of radius (R₂) of between 6 and 8 mm, and a second circular arc (14) of radius (R₃) which is at a tangent to the first arc (15) of radius (R₂) and to the frustoconical generatrix (13) of the seat, (R₃) being equal to 2 ± 1 mm, and axially on the inside to the mounting groove (4) by a frustoconical generatrix (16) forming with the axis of rotation an angle (ϑ) of between 10° and 30° and of axial width (λ) of at least 5 mm; in that the bead (B) intended to be mounted on the rim seat provided with the circumferential projection (2) has a base (3), the meridian profile of which is adapted to the meridian profile of said seat, which meridian profile has axially on the inside, starting from a point distant from the vertical wall (31) of the bead (B) by a quantity (L₁₂) of between 0.9 L - 1 mm and 0.9 L, a generatrix in the form of a circular arc of radius (ρ) of between 4 and 8 mm, the chord subtending this generatrix (36) forming with the axis of rotation an angle (γ) of between 20° and 40°, said generatrix (36) being extended by a last quasi-cylindrical generatrix (37), the axially inner ends of said generatrices being respectively distant axially from the vertical wall (31) of the bead (B) by quantities (L) and (L₁) greater than L by at most 5 mm and in that the vulcanised rubber surrounding the complex consisting of bead wire (5), carcass reinforcement (6) and upturn (60) thereof, axially on either side of this complex and at least in the radially inner part of an axis parallel to the axis of rotation passing through the end of the upturn (60) of the carcass reinforcement (6), has a secant modulus of elasticity in extension at an elongation of 10% of at least 4 MPa.

2. An assembly according to Claim (1), characterised in that the base (3) of the bead (B) intended to bear on the rim seat with circumferential projection (2) also has a circular arc (32) which is at a tangent to the vertical wall of the bead (31) and to a frustoconical generatrix (33) forming with an angle (α) of between 0° and 15° the axis of rotation of the assembly, said generatrix (33) being extended axially on the inside by a second generatrix (34) forming with the axis of rotation an angle (β) of between 20° and 35°, which itself is extended by a quasi-cylindrical generatrix (35) which precedes the circular generatrix (36) of radius (ρ), the axially inner ends of said generatrices being respectively axially distant from the vertical wall (31) of the bead (B) by quantities (L₁₀) equal to 0.4 L ± 1 mm, (L₁₁) equal to 0.7 L ± 1 mm and (L₁₂) of between 0.9 L - 1 mm and 0.9 L.

3. An assembly according to Claim (2), characterised in that the circular arc (32) which is at a tangent to the vertical wall (31) of the bead (B) is replaced by the generatrix (32) of a frustoconical zone, this generatrix (32) forming an angle (φ) of between 45° and 60° with the axis of rotation of the assembly.

4. An assembly according to one of Claims 1 to 3, characterised in that the lower part of the bead, substantially defined radially on the inside by the second frustoconical zone (34) of angle (β) and at most the entire quasi-cylindrical zone (35), radially on the outside by the extension towards the inside of the first frustoconical zone (33) of angle (α) and axially on the inside by a quasi-vertical wall, is formed of a vulcanised rubber having a secant modulus of elasticity in extension of at most 0.7 MPa at 10% elongation.

5. A rim for a light vehicle comprising at least one seat provided with a circumferential projection (2), the point (A) of which which is furthest from the axis of rotation is located at a radial distance (H), measured between the point (C) of the seat having the minimum diameter and said point (A), of between 3 and 4 mm, this point (A) being joined axially on the outside to the frustoconical generatrix (13) of the seat, forming an angle (δ) of 5° ± 1° with the axis of rotation of the assembly, by a circular arc (15) centred on the line perpendicular to the axis of rotation, passing through (A), and of radius (R₂) of between 6 and 8 mm, and a second circular arc (14) of radius (R₃) which is at a tangent to the first arc (15) of radius (R₂) and to the frustoconical generatrix (13) of the seat, (R₃) being equal to 2 ± 1 mm, and axially on the inside to the mounting groove (4) by a frustoconical generatrix (16) forming with the axis of rotation an angle (ϑ) of between 10° and 30° and of axial width (λ) of at least 5 mm.

## Patentansprüche

1. Einheit aus einem Luftreifen für ein Leichtfahrzeug, der keine unabhängige Luftkammer besitzt und mit einer radialen Karkassenbewehrung (6) und einer Scheitelbewehrung versehen ist, wobei die Karkassenbewehrung (6) in jedem Wulst (B) durch Wickeln um einen im wesentlichen nicht dehnbaren Wulstkern (5) verankert ist, und einer Felge (1), die zwei Kanten (11), eine umlaufende Auskehlung (4) und, wenigstens an der Außenseite des Fahrzeugs, einen Felgensitz, der mit der Drehachse der Einheit einen Winkel (δ) von 5° ± 1° bildet und mit einem um die Drehachse rotationssymmetrischen umlaufenden Vorsprung (2) versehen ist, aufweist, wobei der radial am weitesten von der Drehachse entfernte Punkt (A) dieses Vorsprungs einen axialen Abstand (L) von der Felgenkante (11) hat,
**dadurch gekennzeichnet,** daß
die Felge im Querschnitt einen Sitz mit einem umlaufenden Vorsprung (2) hat, dessen von der Drehachse am weitesten entfernter Punkt (A) in einem radialen Abstand (H), gemessen zwischen dem Punkt (C) des Sitzes mit minimalem Durchmesser und dem Punkt (A), von 3 bis 4 mm angeordnet ist, wobei dieser Punkt (A) axial nach außen mit der Kegelerzeugenden (13) des Sitzes, die einen Winkel (δ) von 5° ± 1° mit der Drehachse der Einheit bildet, über einen Kreisbogen (15), dessen Mittelpunkt auf der Senkrechten zur Drehachse liegt, die durch (A) verläuft, und der einen Radius (R₂) von 6 bis 8 mm hat, und über einen zweiten Kreisbogen (14) mit Radius (R₃) verbunden ist, der tangential zum ersten Kreisbogen (R₂) und zur Kegelerzeugenden (13) des Sitzes liegt, wobei (R₃) gleich 2 ± 1 mm ist, und axial nach innen mit der Montageauskehlung (4) über eine Kegelerzeugende (16) verbunden ist, die mit der Drehachse einen Winkel (ϑ) von 10° bis 30° bildet und eine axiale Breite (λ) von wenigstens 5 mm hat, daß der zur Montage am Sitz der mit dem umlaufenden Vorsprung (2) versehenen Felge vorgesehene Wulst (B) eine Basis (3) hat, deren Querschnittskontur der Querschnittskontur des Sitzes angepaßt ist, wobei die Querschnittskontur ausgehend von einem Punkt, der von der vertikalen Wand (31) des Wulstes (B) eine Entfernung (L₁₂) von 0,9 L - 1 mm bis 0,9 L hat, eine Erzeugende in Form eines Kreisbogens mit Radius (ρ) von 4 bis 8 mm aufweist, wobei die von dieser Erzeugenden (36) aufgespannte Sehne mit der Drehachse einen Winkel (γ) von 20 bis 40° bildet und die Erzeugende durch eine letzte quasizylindrische Erzeugende (37) verlängert ist, wobei die axial inneren Enden dieser Erzeugenden einen Abstand (L) bzw. einen Abstand (L₁), der um wenigstens 5 mm größer ist als L, von der vertikalen Wand (31) des Wulstes (B) haben, und daß das Vulkanisat, das den Komplex aus Wulstkern (5), der Karkassenbewehrung (6) und deren Rückführung (60) beiderseits dieses Komplexes und wenigstens in dem Bereich radial innerhalb einer durch das Ende der Rückführung (60) der Karkassenbewehrung (6) verlaufenden, zur Drehachse parallelen Achse einen Streckelastizitätsmodul bei 10 % Dehnung von wenigstens 4 MPa hat.

2. Einheit nach Anspruch 1,
dadurch gekennzeichnet, daß
die zum Andrücken an den Sitz der Felge mit umlaufendem Vorsprung (2) vorgesehene Basis (3) des Wulstes (B) einen Kreisbogen (32) aufweist, der tangential zur vertikalen Wand des Wulstes (31) und einer Kegelerzeugenden (33) liegt, die mit der Drehachse der Einheit einen Winkel (α) von 0° bis 15° bildet, wobei die Erzeugende (33) axial nach innen durch eine zweite Erzeugende (34) verlängert ist, die mit der Drehachse einen Winkel (β) von 20° bis 35° bildet und ihrerseits durch eine quasizylindrische Erzeugende (35) verlängert ist, die der kreisförmigen Erzeugenden (36) mit Radius (ρ) vorangeht, wobei die axial inneren Enden der genannten Erzeugenden von der vertikalen Wand (31) des Wulstes (B) Abstände (L₁₀) gleich 0,4 L ± 1 mm, (L₁₁) gleich 0,7 L ± 1 mm bzw. (L₁₂) von zwischen 0,9 L - 1 mm und 0,9 L haben.

3. Einheit nach Anspruch 2,
dadurch gekennzeichnet, daß
der tangential zur vertikalen Wand (31) des Wulstes (B) liegende Kreisbogen (32) durch eine Erzeugende (32) eines kegelförmigen Abschnitts ersetzt ist, welche Erzeugende (32) mit der Drehachse der Einheit einen Winkel (φ) von 45° bis 60° bildet.

4. Einheit nach einem der Ansprüche 1 bis 3,
dadurch gekennzeichnet, daß
der untere Bereich des Wulstes, der radial nach innen durch den zweiten kegelförmigen Abschnitt (34) mit Winkel (β) und höchstens den gesamten quasizylindrischen Abschnitt (35) sowie radial nach außen durch die einwärts gerichtete Verlängerung des ersten kegelförmigen Abschnitts (33) mit Winkel (α) sowie axial nach innen durch eine quasivertikale Wand begrenzt ist, aus einem Vulkanisat gebildet ist, dessen Streckelastizitätsmodul bei einer Dehnung von 10 % höchstens gleich 0,7 MPa ist.

5. Felge für ein Leichtfahrzeug mit wenigstens einem Sitz, der mit einem umlaufenden Vorsprung (2) versehen ist, dessen am weitesten von der Drehachse entfernter Punkt (A) in einem radialen Abstand (H), gemessen zwischen dem Punkt (C) des Sitzes mit minimalem Durchmesser und diesem Punkt (A), von 3 bis 4 mm liegt, wobei der Punkt (A) axial nach außen mit der Kegelerzeugenden (13) des Sitzes, die einen Winkel (δ) von 5° ± 1° mit der Drehachse der Einheit bildet, über einen Kreisbogen (15), dessen Mittelpunkt auf der durch (A) verlaufenden Senkrechten zur Drehachse liegt, und der einen Radius (R₂) von 6 bis 8 mm hat, und einen zweiten Kreisbogen (14) mit Radius (R₃) verbunden ist, der tangential zum ersten Kreisbogen (15) mit Radius (R₂) und der Kegelerzeugenden (13) des Sitzes liegt, wobei (R₃) gleich 2 ± 1 mm ist, und der axial nach innen mit der Montageauskehlung (4) durch eine Kegelerzeugende (16) verbunden ist, die mit der Drehachse einen Winkel (ϑ) von 10° bis 30° bildet und eine axiale Breite (λ) von wenigstens gleich 5 mm hat.
